# EUROPEAN PATENT SPECIFICATION

(11) **EP 3 211 234 B1**
(45) Date of publication and mention of the grant of the patent: **25.03.2020**
(21) Application number: 17157904.8
(22) Date of filing: 24.02.2017
(51) Int. Cl.: F04B 39/00

(54) **IMPROVED AIR COMPRESSOR**
VERBESSERTER LUFTKOMPRESSOR
COMPRESSEUR D'AIR AMÉLIORÉ

(30) Priority: 26.02.2016 TW 105106035
(43) Date of publication of application: 30.08.2017
(73) Proprietor: Chou, Wen-San, Tainan City (TW)
(72) Inventor: Chou, Wen-San, Tainan City (TW)
(74) Representative: Lang, Christian

(56) References cited:
- EP-A1- 2 955 381
- US-A- 2 140 328
- US-A- 2 588 112
- US-A1- 2013 064 642

## Description

### (a) Technical Field of the Invention

The present invention relates to an air compressor and, more particularly, to an improved air compressor, wherein a cylinder thereof is fitted with a piston body and defines a plurality of exit holes at its top wall and is provided at its top wall with a plurality of air blocking walls, which can isolate the exit holes from each other at a certain extent, and the exit holes are regulated by a control mechanism to be opened or closed, whereby the piston body can conduct reciprocating motion more smoothly and thus the performance of the air compressor can be increased.

### (b) Description of the Prior Art

Generally, an air compressor has a cylinder which allows a piston body to conduct reciprocating motion therein to produce compressed air which can overcome a valve mechanism, so that the compressed air can flow through an exit hole of the cylinder to enter the inner space of an air storage container or an air tank. The air storage container is provided with outlets for delivering the compressed air to an object to be inflated.

In conventional air compressors, there is only one exit hole defined at the cylinder for outputting the compressed air into the air storage container. The exit hole of the cylinder is controlled by a valve mechanism, which generally includes a plug and a compression spring, so that the exit hole can be opened or closed properly according to the pressure of the compressed air. In operation, the compressed air produced in the cylinder can overcome the compressive force of the compression spring to enter the inner space of the air compressor. However, the compressed air stored in the air storage container can exert a back force on the plug, thus restraining the plug from being moved away from the exit hole. As a result, the piston body, which conducts reciprocating motion in relation to the cylinder, will be subjected to greater resistance. Therefore, the piston body may not move smoothly in relation to the cylinder, and thus the speed of inflating an object may decrease. Furthermore, the motor of the air compressor may become too hot, thus decreasing the performance of the motor. Even worse, the motor may be under the risk of burning out.

Document US 2013/064642 A1 therefore discloses a conventional air compressor defining a plurality of exit holes at a top wall of the cylinder, namely in a valve plate assembly attached on a top side of the cylinder. Each of the exit holes is provided with a control mechanism, such as a leaf spring, to regulate the holes to be opened or closed. From document US 2 588 112 A another conventional air compressor is known comprising a plurality of exit holes defined at a plate fixed to the open top surface of the cylinder and further comprising a complex air guiding and muffling structure surrounding the exit holes to achieve by the proper dimensioning of the distances between the elements of air guiding and muffling structure, a substantial reduction of the noise generated in operation of the valve mechanism.

Nonetheless, in view of the foregoing, the applicant intends to develop a further improved air compressor which can solve the shortcomings of conventional air compressors.

### SUMMARY OF THE INVENTION

One object of the present invention, which is defined in claim 1, is to provide an air compressor, wherein a cylinder thereof is fitted with a piston body and defines at its top wall a plurality of exit holes and is provided at its top wall with a plurality of air blocking walls, which isolate the exit holes from each other at a certain extent, and the exit holes are regulated by a control mechanism to be opened or closed, whereby when the compressed air is produced in the cylinder causing the control mechanism to open the exit holes, the instantaneous high-pressure air that flows through the exit holes can be restrained by the air blocking walls to prevent the air from interfering with operation of the control mechanism, so that the piston body can conduct reciprocating motion more smoothly and thus the performance of the air compressor can be increased.

According to one aspect of the present invention, since the cylinder defines a plurality of exit holes, a large amount of compressed air produced, through reciprocating motion of the piston body, in the cylinder may enter an air storage container in a short time. Since the compressed air can quickly enter the air storage container, the piston body can conduct reciprocating motion more smoothly and thus the performance of the air compressor and the speed of inflating an object can be increased.

Other objects, advantages, and novel features of the present invention will become more apparent from the following detailed description when taken in conjunction with the accompanying drawings.

### BRIEF DESCRIPTION OF THE DRAWINGS

FIG. 1 shows a 3-dimensional view of an air compressor according to one embodiment of the present invention.
FIG. 2 shows an exploded view of the air compressor.
FIG. 3 shows a plan view of the air compressor, wherein a plurality of exit holes defined at a cylinder thereof are revealed.
FIG. 4 shows a plan view of the air compressor, wherein a plurality of plugs being used to seal the exit holes are revealed.
FIG. 5 shows a plan view of the air compressor, wherein an air storage container is assembled onto the cylinder.
FIG. 6 shows a sectional view of the air compressor taken along line A-A in FIG. 5.
FIG. 7 shows a 3-dimensional sectional view of the air compressor.
FIG. 8 shows a plan view of the air compressor, wherein a gear and a piston body used in the air compressor are revealed.

### DETAILED DESCRIPTION OF THE PREFERRED EMBODIMENTS

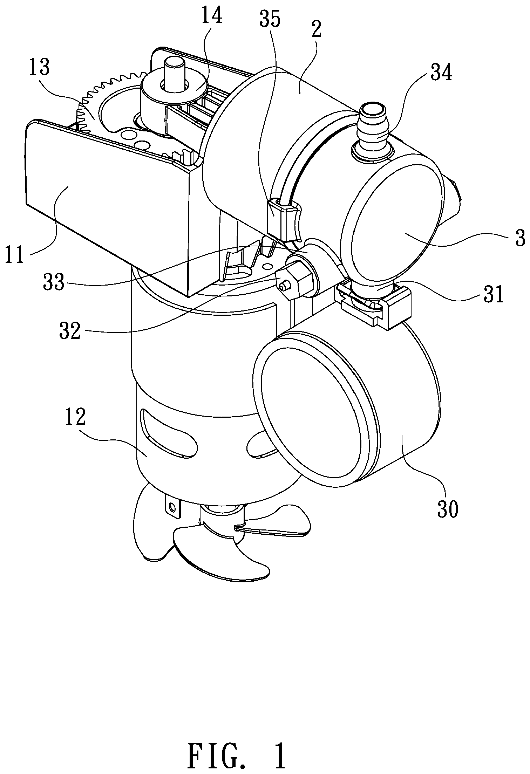

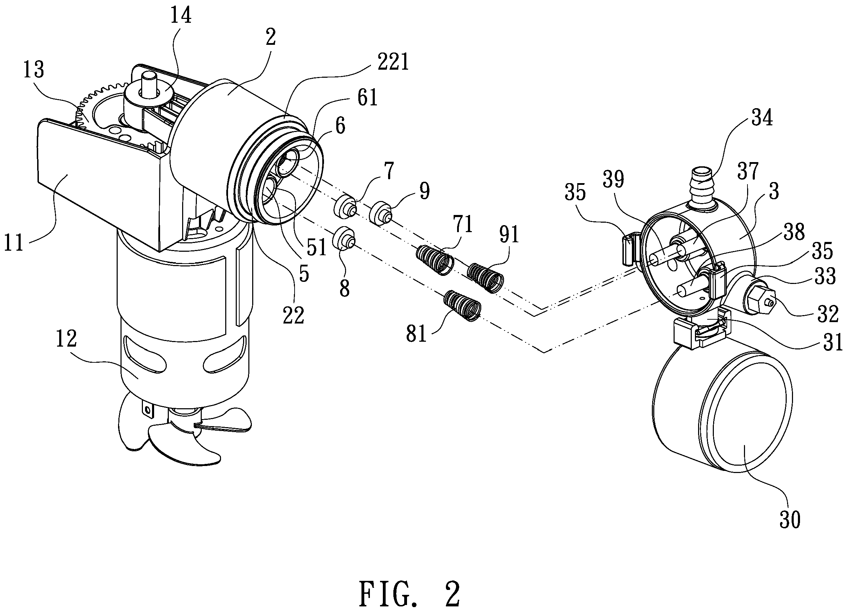

'Referring to FIGS. 1 and 2, an improved air compressor according to one embodiment of the present invention is shown, which generally comprises a main frame 11 for mounting a motor 12, and a cylinder 2 fitted with a piston body 14. The motor 12 can rotate a gear 13 to drive the piston body 14 to conduct reciprocating motion in relation to the cylinder 2 so as to produce therein compressed air, which can enter an air storage container 3 provided with one or more outlets, wherein, for example, the outlet 31 can be connected with a pressure gauge 30; the outlet 33 can be connected with a relief valve 32; the outlet 34 can be connected with a hose for inflating an object (not shown).

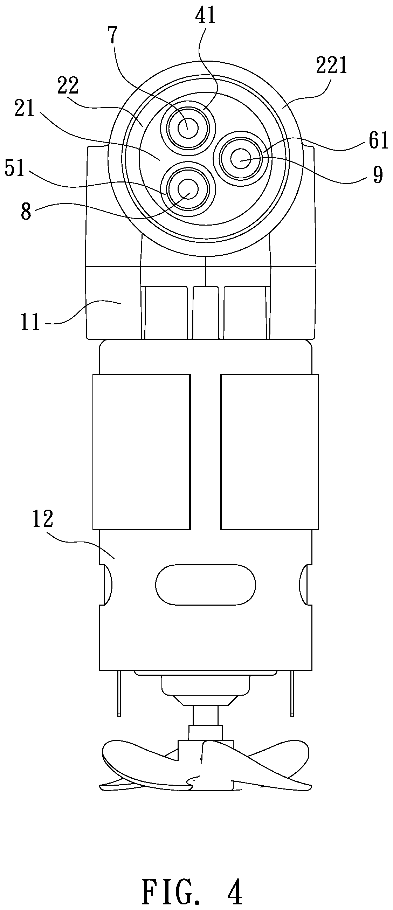

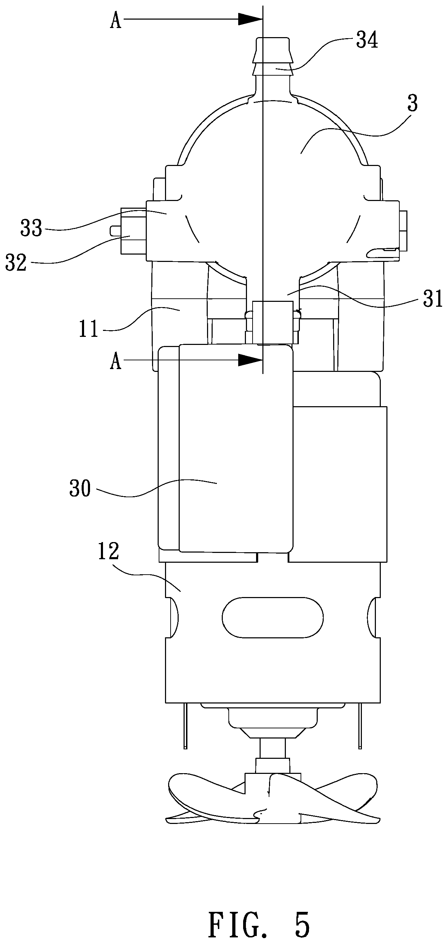

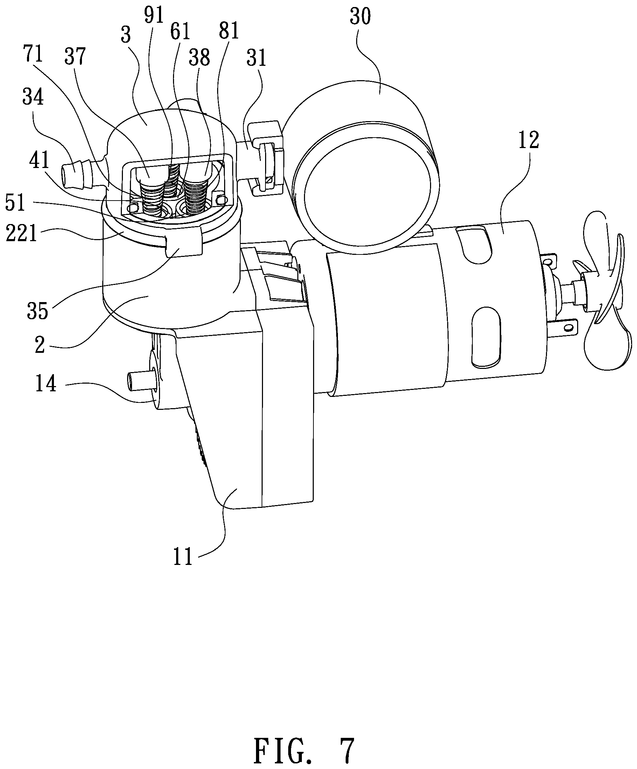

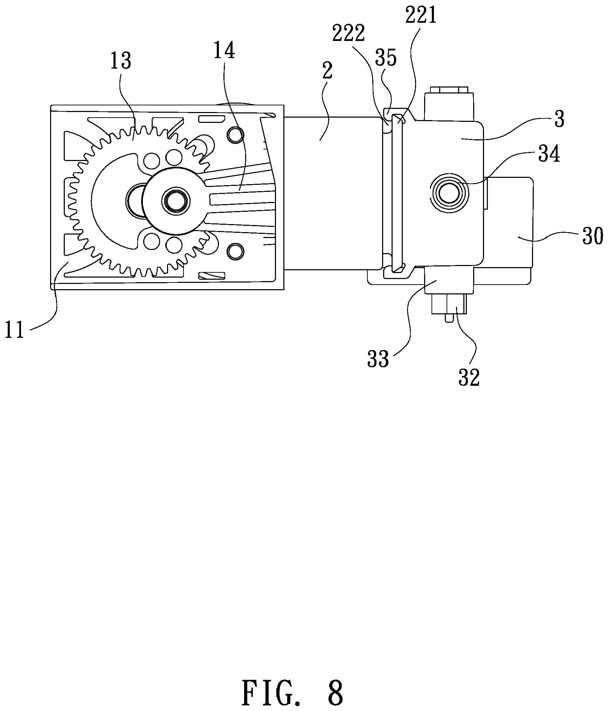

As shown in FIGS. 2 through 8, the cylinder 2 of the present invention is designed in a way different from conventional technology, wherein the cylinder 2 defines a plurality of exit holes and a plurality of air blocking walls at an interface thereof, which refers to the top wall 21 in the present invention. Through the exit holes, the compressed air produced in the cylinder can be outputted to a container or tank. Furthermore, the cylinder 2, which includes the exit holes and the air blocking walls, can be formed integrally with the main frame 11. In this embodiment, three exit holes 4, 5, 6 are defined at the top wall 21, and three cylindrical air blocking walls 41, 51, 61 are formed at the top wall 21. The air blocking walls 41, 51, 61 surround the exit holes 4, 5, 6 respectively and extend upwardly from the top wall 21. The exit holes 4, 5, 6 can be regulated by a control mechanism to be opened or closed. The control mechanism includes a plurality of pugs 7, 8, 9 and a plurality of compression springs 71, 81, 91 corresponding to the exit holes 4, 5, 6. The plugs 7, 8, 9 are fitted into the air blocking walls 41, 51, 61 and urged by the compression springs 41, 51, 61 to seal the exit holes 4, 5, 6 respectively (see FIG. 4). The springs 71, 81, 91 are placed in contact with the plugs 7, 8, 9, respectively (see FIGS, 6 and 7). Each of the compression springs 71, 81, 91 has one end engaging with one of the plugs 7, 8, 9. The cylinder 2 has a tubular projection 22 formed on the top wall 21. The tubular projection 22 is provided at its outer surface with a circular flange 221 and defines an annular groove 222 between the circular flange 221 and the top wall 21. The air storage container 3 is provided at an outer surface thereof with two coupling means 35 capable of being inserted into the annular groove 222 and engaged with the circular flange 221 of the cylinder 2 (see FIG. 8). The air storage container 3 is provided at an inner surface thereof with a plurality of columns 37, 38, 39. Each of the compression springs 71, 81, 91 has another end being fitted at a distal end of one of the columns 37, 38, 39. The compressive forces of the compression springs 71, 81, 91 enable the plugs 7, 8, 9 to seal the exit holes 4, 5, 6, respectively; wherein each of the columns 37, 38, 39 is located at a predetermined height above the corresponding plug to limit the movement of the corresponding plug to facilitate controlling the compressed air entering the air storage container 3. The air storage container 3 can be assembled onto the cylinder 2 to form an integral structure, as shown in FIG. 1.

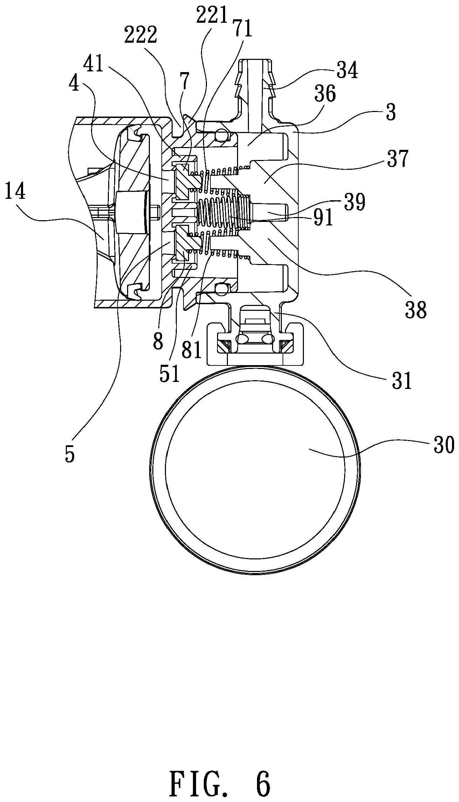

Referring to FIGS. 6 through 8, when the piston body 14 conducts reciprocating motion, the compressed air produced in the cylinder 2 can overcome the force of the compression springs 71, 81, 91 exerted on the plugs 7, 8, 9, thus pushing the plugs 7, 8, 9 to move away from the exit holes 4, 5, 6, respectively, so that the compressed air can flow into the inner space 36 of the air storage container 3. Initially, since the compressed air can flow into the inner space 36 of the air storage container 3 simultaneously via the exit holes 4, 5, 6, the air storage container 3 can be filled with a large amount of air in a short time. Later, since there is a large amount of air having entered the inner space 36 of the air storage container 3, the air contained in the air storage container 3 can exert a greater back force on the plugs 7, 8, 9 compared to the initial air contained in the air storage container 3. In other words, the piston body 14 may experience greater resistance in conducting reciprocating motion, and this may cause the exit holes 4, 5, 6 more difficult to be opened. However, upon a decrease of the pressure of the air contained in the air storage container 3, the back force exerted on the plugs 7, 8, 9 will decrease and this allows the compressed air produced in the cylinder 2 to quickly enter the inner space 36 of the air storage container 3. Besides, the air blocking walls 41, 51, 61 can respectively confine the plugs 7, 8, 9 therein, and are configured to have predetermined heights greater than maximum distances that the plugs 7, 8, 9 can be pushed up by the compressed air to travel, so that the air blocking walls 41, 51, 61 can restrain the instantaneous high-pressure air that flows through the exit holes 4, 5, 6, thus preventing the air from interfering with movements of the plugs 7, 8, 9, so that the piston body 14 can conduct reciprocating motion more smoothly and thus the performance of the air compressor and the speed of inflating an object can be increased.

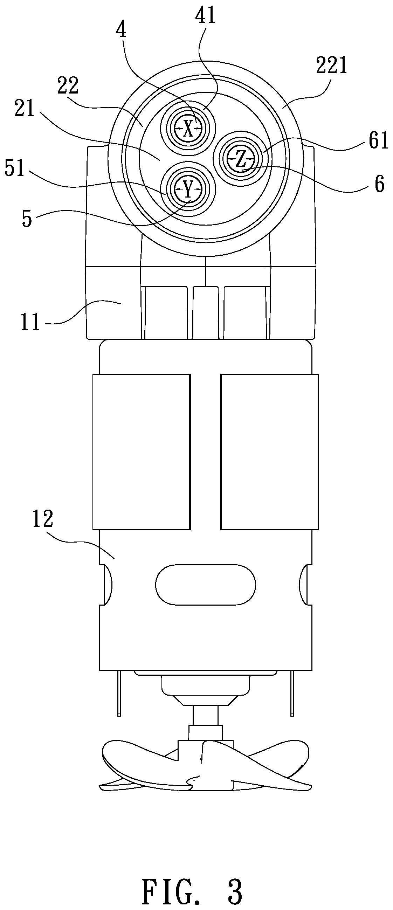

The exit hole 4 is defined to have a diameter of (X); the exit hole 5 is defined to have a diameter of (Y); the exit hole 7 is defined to have a diameter of (Z). As shown in FIG. 3, the exit holes 4, 5, 6 are equal in diameter; however, this is not a limitation for the structure of the exit holes. The exit holes in the present invention may be defined to have different diameters. Each of the plugs 7, 8, 9 has an engagement surface sufficient for covering one of the exit holes 4, 5, 6.

As a summary, the air compressor of the present invention has a breakthrough over the prior art in that the top wall 21 of the cylinder 2 defines a plurality of exit holes 4, 5, 6 and is provided with a plurality of air blocking walls 41, 51, 61 around the exit holes, and a plurality of plugs 7, 8, 9 are used to control the states (open or closed) of the exit holes, so that the compressed air produced in the cylinder 2 may quickly enter the inner space 36 of the air storage container 3. In addition, the air blocking walls 41, 51, 61 respectively confine the plugs 7, 8, 9 therein, thus isolating the exit holes 4, 5, 6 from each other at a certain extent, so that when the compressed air produced in the cylinder 2 pushes the plugs 7, 8, 9 up to open the exit holes 4, 5, 6, the instantaneous high-pressure air that flows through the exit holes 4, 5, 6 can be restrained by the air blocking walls 41, 51, 61, thus preventing the air from interfering with movements of the plugs 7, 8, 9, so that the piston body 14 can conduct reciprocating motion more smoothly and thus the performance of the air compressor can be increased. These features render the air compressor of the present invention useful and inventive.

## Claims

1. Air compressor including an air storage container (3), a motor (12), a main frame (11) for mounting the motor (12) and a cylinder (2) fitted with a piston body (14), wherein the motor (12) is capable of driving the piston body (14) to conduct reciprocating motion to produce in the cylinder (2) compressed air which then enters an air storage container (3) via a plurality of exit holes (4, 5, 6) defined at a top wall (21) of the cylinder (2), and the exit holes (4, 5, 6) are regulated by a control mechanism to be opened or closed, **characterized in that**
the top wall (21) of the cylinder (2) is provided with a plurality of air blocking walls (41, 51, 61), wherein the air blocking walls (41, 51, 61) are cylindrical walls respectively surrounding the exit holes (4, 5, 6) and extending upwardly from the top wall (21) and serve for isolating the exit holes from each other at a certain extent, wherein the control mechanism includes a plurality of plugs (7, 8, 9) and a plurality of compression springs (71, 81, 91) corresponding to the exit holes (4, 5, 6), the plugs (7, 8, 9) being fitted into the air blocking walls (41, 51, 61) and urged by the compression springs (71, 81, 91) to seal the exit holes (4, 5, 6) respectively, each of the plugs (7, 8, 9) having an engagement surface sufficient for covering one of the exit holes (4, 5, 6); whereby when the compressed air is produced in the cylinder (2) causing the control mechanism to open the exit holes (4, 5, 6), the instantaneous high-pressure air that flows through the exit holes (4, 5, 6) can be restrained by the air blocking walls to prevent the air from interfering with operation of the control mechanism, so that the piston body (14) can conduct reciprocating motion more smoothly and thus the performance of the air compressor can be increased.

2. The air compressor of claim 1, wherein the cylinder (2), including the exit holes (4, 5, 6) and the air blocking walls (41, 51, 61), is formed integrally with the main frame (11).

3. The air compressor of claim 1, wherein the cylinder (2) has a tubular projection (22) formed on the top wall (21), the tubular projection (22) provided at its outer surface with a circular flange (221) and defining an annular groove (222) between the circular flange (221) and the top wall (21), each of the compression springs (71, 81, 91) having one end engaging with one of the plugs (7, 8, 9); the air storage container (3) is provided at an outer surface thereof with two coupling means (35) capable of being inserted into the annular groove (222) and engaged with the circular flange (221) of the cylinder (2); the air storage container (3) is provided at an inner surface thereof with a plurality of columns (37, 38, 39); each of the compression springs (71, 81, 91) has another end being fitted at a distal end of one of the columns (37, 38, 39), the compressive forces of the compression springs (71, 81, 91) enabling the plugs (7, 8, 9) to seal the exit holes (4, 5, 6), respectively; wherein each of the columns (37, 38, 39) is located at a predetermined height above the corresponding plug to limit the movement of the corresponding plug to facilitate controlling the compressed air entering the air storage container (3).

4. The air compressor of claim 1, wherein the air blocking walls (41, 51, 61) are configured to have predetermined heights greater than maximum distances that the plugs (7, 8, 9) can be pushed up by the compressed air to travel, whereby when the compressed air produced in the cylinder (2) pushes the plugs (7, 8, 9) up to open the exit holes (4, 5, 6), the instantaneous high-pressure air that flows through the exit holes (4, 5, 6) can be restrained by the air blocking walls (41, 51, 61) to prevent the air from interfering with movements of the plugs (7, 8, 9).

5. The air compressor of claim 1, wherein the exit holes (4, 5, 6) are defined to be approximately equal in diameter.

6. The air compressor of claim 1, wherein the exit holes (4, 5, 6) are defined to have different diameters.

## Patentansprüche

1. Luftkompressor, welcher einen Luftsammelbehälter (3), einen Motor (12), einen Hauptrahmen (11) zur Befestigung des Motors (12) und einen mit einem Kolbenkörper (14) bestückten Zylinder (2) umfasst, wobei der Motor (12) den Kolbenkörper (14) zur Ausführung einer hin- und hergehenden Bewegung antreiben kann, um in dem Zylinder (2) Druckluft zu erzeugen, welche dann über eine Vielzahl von Austrittslöchern (4, 5, 6), die an einer oberen Wand (21) des Zylinders (2) definiert sind, in den Luftsammelbehälter (3) eintritt, wobei ein öffnen oder Schließen der Austrittslöcher (4, 5, 6) durch einen Kontrollmechanismus gesteuert wird, **dadurch gekennzeichnet, dass**
die obere Wand (21) des Zylinders (2) mit einer Vielzahl von Luftsperrwänden (41 , 51, 61) versehen ist, wobei die Luftsperrwände (41, 51, 61) zylindrische Wände sind, welche die Austrittslöcher (4, 5, 6) entsprechend umgeben und sich von der oberen Wand (21) nach oben erstrecken und dazu dienen, um die Austrittslöcher in gewissem Maß voneinander zu isolieren, wobei der Kontrollmechanismus eine Vielzahl von Stopfen (7, 8, 9) und eine Vielzahl von Druckfedem (71, 81, 91) beinhaltet, die mit den Austrittslöchem (4, 5, 6) korrespondieren, wobei die Stopfen (7, 8, 9) in die Luftsperrwände (41, 51, 61) eingepasst sind und durch die Druckfedem (71, 81, 91) gedrückt werden, um die Austrittslöcher (4, 5, 6) jeweils dicht zu verschließen, wobei jeder der Stopfen (7, 8, 9) eine Eingriffsoberfläche aufweist, welche ausreichend ist, um eines der Austrittslöcher (4, 5, 6) abzudecken, wobei, wenn die Druckluft in dem Zylinder (2) erzeugt wird und bewirkt, dass der Kontrollmechanismus die Austrittslöcher (4, 5, 6) öffnet, die unmittelbare Hochdruckluft, welche durch die Austrittslöcher (4, 5, 6) fließt, durch die Luftsperrwände beschränkt werden kann, um zu verhindem, dass die Luft die Funktion des Kontrollmechanismus beeinträchtigt, sodass der Kolbenkörper (14) die hin- und hergehende Bewegung reibungsloser ausführen kann und somit die Leistung des Luftkompressors erhöht werden kann.

2. Luftkompressor nach Anspruch 1, bei welchem der Zylinder (2), der die Austrittslöcher (4, 5,6) und die Luftsperrwände (41, 51, 61) umfasst, integral mit dem Hauptrahmen (11) ausgebildet ist.

3. Luftkompressor nach Anspruch 1, bei welchem der Zylinder (2) einen rohrförmigen Vorsprung (22) hat, der an der oberen Wand (21) ausgebildet ist, wobei der rohrförmige Vorsprung (22) an seiner Außenfläche mit einem kreisförmigen Flansch (221) versehen ist und eine ringförmige Rille (222) zwischen dem kreisförmigen Flansch (221) und der oberen Wand (21) definiert, wobei jede der Druckfedem (71, 81, 91) ein Ende hat, das mit einem der Stopfen (7, 8, 9) in Eingriff steht, wobei der Luftsammelbehälter (3) an seiner Außenfläche mit zwei Kopplungsmitteln (35) versehen ist, welche zum Einstecken in die ringförmige Rille (222) geeignet sind und mit dem kreisförmigen Flansch (221) des Zylinders (2) in Eingriff stehen, wobei der Luftsammelbehälter (3) an seiner Innenfläche mit einer Vielzahl von Säulen (37, 38, 39) versehen ist, wobei jede der Druckfedem (71 , 81, 91) ein anderes Ende hat, das an einem distalen Ende von einer der Säulen (37, 38, 39) angebracht ist, wobei die Druckkräfte der Druckfedem (71, 81, 91) ermöglichen, dass die Stopfen (7, 8, 9) die Austrittslöcher (4, 5, 6) jeweils dicht verschließen, wobei jede der Säulen (37, 38, 39) in einer vorgegebenen Höhe oberhalb des korrespondierenden Stopfens angeordnet ist, um die Bewegung des korrespondierenden Stopfens zu begrenzen, um eine Kontrolle der in den Luftsammelbehälter (3) eintretenden Druckluft zu vereinfachen.

4. Luftkompressor nach Anspruch 1, bei welchem die Luftsperrwände (41, 51, 61) so konfiguriert sind, dass sie vorbestimmte Höhen haben, die größer sind als die größtmöglichen Strecken, welche die Stopfen (7, 8, 9) durch die Druckluft zum Hub nach oben gedrückt werden können, wobei, wenn die in dem Zylinder (2) erzeugte Druckluft die Stopfen (7, 8, 9) nach oben drückt, um die Austrittslöcher (4, 5, 6) zu öffnen, die unmittelbare Hochdruckluft, welche durch die Austrittslöcher (4, 5, 6) strömt, durch die Luftsperrwände (41, 51, 61) beschränkt werden kann, um zu verhindem, dass die Luft die Bewegungen der Stopfen (7, 8, 9) beeinträchtigt.

5. Luftkompressor nach Anspruch 1, bei welchem die Austrittslöcher (4, 5, 6) so definiert sind, dass sie annähernd einen gleichen Durchmesser haben.

6. Luftkompressor nach Anspruch 1, bei welchem die Austrittslöcher (4, 5, 6) so definiert sind, dass sie unterschiedliche Durchmesser haben.

## Revendications

1. Compresseur d'air incluant un conteneur de stockage d'air (3), un moteur (12), un châssis principal (11) pour monter le moteur (12) et un cylindre (2) équipé d'un corps de piston (14), dans lequel le moteur (12) est susceptible d'entraîner le corps de piston (14) pour mener un mouvement de va-et-vient pour produire dans le cylindre (2) de l'air comprimé qui entre alors dans un conteneur de stockage d'air (3) via une pluralité de trous de sortie (4, 5, 6) définis au niveau d'une paroi supérieure (21) du cylindre (2), et les trous de sortie (4, 5, 6) sont régulés par un mécanisme de commande pour être ouverts ou fermés, **caractérisé en ce que**
la paroi supérieure (21) du cylindre (2) est munie d'une pluralité de parois de blocage d'air (41, 51, 61), dans laquelle les parois de blocage d'air (41, 51, 61) sont des parois cylindriques entourant respectivement les trous de sortie (4, 5, 6) et s'étendant vers le haut à partir de la paroi supérieure (21) et servent à isoler les trous de sortie les uns des autres dans une certaine mesure, dans lequel le mécanisme de commande inclut une pluralité de bouchons (7, 8, 9) et une pluralité de ressorts de compression (71, 81, 91) correspondant aux trous de sortie (4, 5, 6), les bouchons (7, 8, 9) étant ajustés dans les parois de blocage d'air (41, 51, 61) et pressés par les ressorts de compression (71, 81, 91) pour respectivement sceller les trous de sortie (4, 5, 6), chacun des bouchons (7, 8, 9) ayant une surface de mise en prise suffisante pour couvrir l'un des trous de sortie (4, 5, 6); de sorte que lorsque l'air comprimé est produit dans le cylindre (2) amenant le mécanisme de commande à ouvrir les trous de sortie (4, 5, 6), l'air à haute pression instantané qui s'écoule à travers les trous de sortie (4, 5, 6) peut être retenu par les parois de blocage d'air pour empêcher l'air d'interférer avec le fonctionnement du mécanisme de commande, de sorte que le corps de piston (14) peut mener un mouvement de va-et-vient sans à-coups et ainsi la performance du compresseur d'air peut être augmentée.

2. Compresseur d'air selon la revendication 1, dans lequel le cylindre (2), incluant les trous de sortie (4, 5, 6) et les parois de blocage d'air (41, 51, 61), est formé d'un seul tenant avec le châssis principal (11).

3. Compresseur d'air selon la revendication 1, dans lequel le cylindre (2) a une partie en saillie tubulaire (22) formée sur la paroi supérieure (21), la partie en saillie tubulaire (22) étant munie au niveau de sa surface extérieure d'une bride circulaire (221) et définissant une rainure annulaire (222) entre la bride circulaire (221) et la paroi supérieure (21), chacun des ressorts de compression (71, 81, 91) ayant une extrémité particulière mettant en prise l'un des bouchons (7, 8, 9); le conteneur de stockage d'air (3) est muni au niveau d'une surface extérieure de celui-ci de deux moyens d'accouplement (35) susceptibles d'être insérés dans la rainure annulaire (222) et mis en prise avec la bride circulaire (221) du cylindre (2); le conteneur de stockage d'air (3) est muni au niveau d'une surface intérieure de celui-ci d'une pluralité de colonnes (37, 38, 39); chacun des ressorts de compression (71, 81, 91) a une autre extrémité qui est ajustée au niveau d'une extrémité distale de l'une des colonnes (37, 38, 39), les forces compressives des ressorts de compression (71, 81, 91) permettant aux bouchons (7, 8, 9) de respectivement sceller les trous de sortie (4, 5, 6); dans lequel chacune des colonnes (37, 38, 39) est située à une hauteur prédéterminée au-dessus du bouchon correspondant pour limiter le mouvement du bouchon correspondant pour faciliter la commande de l'air comprimé entrant dans le conteneur de stockage d'air (3).

4. Compresseur d'air selon la revendication 1, dans lequel les parois de blocage d'air (41, 51, 61) sont configurées pour avoir des hauteurs prédéterminées plus grandes que les distances maximales par lesquelles les bouchons (7, 8, 9) peuvent être poussés vers le haut par l'air comprimé pour se déplacer, de sorte que lorsque l'air comprimé produit dans le cylindre (2) pousse les bouchons (7, 8, 9) vers le haut pour ouvrir les trous de sortie (4, 5, 6), l'air haute pression instantané qui s'écoule à travers les trous de sortie (4, 5, 6) peut être retenu par les parois de blocage d'air (41, 51, 61) pour empêcher l'air d'interférer avec des mouvements des bouchons (7, 8, 9).

5. Compresseur d'air selon la revendication 1, dans lequel les trous de sortie (4, 5, 6) sont définis pour être approximativement égaux en ce qui concerne le diamètre.

6. Compresseur d'air selon la revendication 1, dans lequel les trous de sortie (4, 5, 6) sont définis pour avoir des diamètres différents.
